(19) Europäisches Patentamt / European Patent Office / Office européen des brevets

(11) **EP 3 204 726 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **15774600.9**

(22) Anmeldetag: **01.10.2015**

(51) Int Cl.:
*G01D 5/20* (2006.01)   *G01D 5/22* (2006.01)

(86) Internationale Anmeldenummer:
**PCT/EP2015/072694**

(87) Internationale Veröffentlichungsnummer:
**WO 2016/055348 (14.04.2016 Gazette 2016/15)**

(54) **SENSORANORDNUNG ZUR BERÜHRUNGSLOSEN ERFASSUNG VON DREHWINKELN AN EINEM ROTIERENDEN BAUTEIL**

SENSOR ARRANGEMENT FOR THE CONTACTLESS SENSING OF ANGLES OF ROTATION ON A ROTATING PART

ENSEMBLE CAPTEUR POUR LA DÉTECTION SANS CONTACT D'ANGLES DE ROTATION SUR UN ÉLÉMENT EN ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2014 DE 102014220446**

(43) Veröffentlichungstag der Anmeldung:
**16.08.2017 Patentblatt 2017/33**

(73) Patentinhaber: **Robert Bosch GmbH**
**70442 Stuttgart (DE)**

(72) Erfinder:
• LEIDICH, Stefan
  **71277 Rutesheim (DE)**
• OBERLAENDER, Joerg
  **31139 Hildesheim (DE)**
• KRAYL, Oliver
  **70839 Gerlingen (DE)**

(56) Entgegenhaltungen:
EP-A1- 1 122 520       DE-A1- 10 352 351
DE-A1-102007 037 217   FR-A1- 2 882 818
US-A1- 2005 253 576

**Beschreibung**

Die Erfindung geht aus von einer Sensoranordnung zur berührungslosen Erfassung von Drehwinkeln nach der Gattung des unabhängigen Patentanspruchs 1.

Die Messung von Drehwinkeln an rotierenden Bauteilen erfolgt in der Regel durch Verwendung von Magnetsensoren. Dabei wird das zu messende rotierende Bauteil mit einem Permanentmagneten ausgestattet. Ein korrespondierender Magnetfeldsensor, der beispielsweise in einem integrierten Schaltkreis integriert werden kann, misst die Feldstarke in zwei bzw. drei Raumrichtungen und leitet die Winkelorientierung ab.

Zudem sind aus dem Stand der Technik verschiedene induktive Drehwinkelsensoren bekannt. Mehrheitlich wird die Kopplung zwischen einer Erregerspule und einer oder mehrerer Sensorspulen durch die Drehwinkellage eines Koppelelements (Target) beeinflusst. Die Auswertung von Koppelfaktoren erfordert eine aufwändige Elektronik.

Die DE 197 38 836 A1 offenbart beispielsweise einen induktiven Winkelsensor mit einem Statorelement, einem Rotorelement und einer Auswerteschaltung. Das Statorelement weist eine mit einer periodischen Wechselspannung beaufschlagte Erregerspule sowie mehrere Empfangsspulen auf. Das Rotorelement gibt die Stärke der induktiven Kopplung zwischen Erregerspule und Empfangsspulen in Abhängigkeit seiner Winkelposition relativ zum Statorelement vor. Die Auswerteschaltung bestimmt die Winkelposition des Rotorelements relativ zum Statorelement aus den in den Empfangsspulen induzierten Spannungssignalen.

Aus der DE 103 52 351 A1 ist ein Verfahren zur Bestimmung der Position eines Beeinflussungselements mit einem induktiven Positionssensor bekannt.

Aus der EP 1122 520 A1 ist ein induktiver Positionssensor zur Ermittlung der von ihm eingenommenen Position bekannt.

Aus der FR 2 882 818 und der US 2005/025576 ist jeweils eine Sensoranordnung zur berührungslosen Erfassung von Drehwinkeln an einem rotierenden Bauteil bekannt. Das rotierende Bauteil ist mit einem scheibenförmigen Target gekoppelt, welches eine Metallfläche aufweist und in Verbindung mit einer Spulenanordnung, welche mehrere flächige Detektionsspulen aufweist, mindestens eine Information zur Ermittlung des aktuellen Drehwinkels des rotierenden Bauteils erzeugt.

Aus der DE 10 2007 037 217 A1 ist eine gattungsgemäße Sensoranordnung zur berührungslosen Erfassung der relativen Drehposition zwischen zwei Körpern bekannt. Das rotierende Bauteil ist mit einem plattenförmigen Beeinflussungselement gekoppelt, welches mindestens eine Metallfläche aufweist und in Verbindung mit einer Spulenanordnung, welche mehrere flächige Detektionsspulen aufweist, mindestens eine Information zur Ermittlung des aktuellen Drehwinkels des rotierenden Bauteils erzeugt. Eine Auswerteeinrichtung wandelt die Induktivität einer korrespondierenden flächigen Detektionsspule, welche sich in Abhängigkeit vom Überdeckungsgrad mit der mindestens einen Metallfläche des rotierenden Beeinflussungselements durch Wirbelstromeffekte ändert, in ein Messsignal, welches eine Auswerte- und Steuereinheit messtechnisch erfasst und zur Berechnung des Drehwinkels auswertet.

Offenbarung der Erfindung

Die erfindungsgemäße Sensoranordnung zur berührungslosen Erfassung von Drehwinkeln mit den Merkmalen des unabhängigen Patentanspruchs 1 hat demgegenüber den Vorteil, dass die Auswertung bzw. die messtechnische Bestimmung der Spuleninduktivität bzw. der Wirkung der metallischen Oberdeckung auf die mindestens eine Detektionsspule über eine Wandlung der Spuleninduktivität in ein Messsignal, vorzugsweise in eine analoge Spannung durchgeführt wird. Das implementierte Messprinzip wandelt magnetische in elektrische Energie. Dies ermöglicht die messtechnische Bestimmung der Induktivität der Detektionsspule in vorteilhafter Weise mit einem geringen Hardwareaufwand.

Ausführungsformen der erfindungsgemäßen Sensoranordnung ermöglichen die Implementierung des erfindungsgemäßen Messprinzips unter Verwendung von kostengünstigen Standardbauteilen, wie beispielsweise Transistoren, Dioden und Kondensatoren, in Verbindung mit einem Mikrocontroller, welcher einen Analog/Digitalwandler besitzt. Da solche Mikrocontroller bereits in großer Zahl im Fahrzeug vorhanden sind, kann eine solche Induktionsmessung einfach und kostengünstig implementiert. Zudem können die Messschaltungen jederzeit leicht in Konzepte integriert werden, welche für andere Funktionen bereits einen Mikrocontroller enthalten. Aufgrund der geringen Bauteilezahl ist eine spezielle ASIC Entwicklung möglich jedoch nicht erforderlich. Der Einsatz des Messprinzips ist somit äußerst flexibel möglich.

Ausführungsformen der vorliegenden Erfindung stellen eine Sensoranordnung zur berührungslosen Erfassung von Drehwinkeln an einem rotierenden Bauteil zur Verfügung, welches mit einem scheibenförmigen Target gekoppelt ist, welches mindestens eine Metallfläche aufweist und in Verbindung mit einer Spulenanordnung, welche mindestens eine flächige Detektionsspule aufweist, mindestens eine Information zur Ermittlung des aktuellen Drehwinkels des rotierenden Bauteils erzeugt. Hierbei wandelt mindestens eine Messschaltung die Induktivität einer korrespondierenden flächigen Detektionsspule, welche sich in Abhängigkeit vom Überdeckungsgrad mit der mindestens einen Metallfläche des rotierenden Targets durch Wirbelstromeffekte ändert, in ein Messsignal, welches eine Auswerte- und Steuereinheit messtechnisch erfasst und zur Berechnung des Drehwinkels auswertet.

Hierbei weist die mindestens eine Messschaltung mehrere elektronische Schalter auf, welche die Auswerte- und Steuereinheit über korrespondierende Ansteuersignale schalten kann. Die elektronischen Schalter können beispielsweise als Transistoren, vorzugsweise als Feldeffekttransistoren ausgeführt werden. Durch Ansteuern von korrespondierenden elektronischen Schaltern verbindet die Auswerte- und Steuereinheit die auszuwertende Detektionsspule während einer Erregungsphase mit einer Betriebsspannung und mit einem Bezugspotential. Zu Beginn des Messvorgangs trennt die Auswerte- und Steuereinheit die auszuwertende Detektionsspule durch Umschalten des korrespondierenden elektronischen Schalters vom Bezugspotential. Zu Beginn des Auswertevorgangs kann die Auswerte- und Steuereinheit die mindestens eine Detektionsspule, beispielsweise durch Umschalten des korrespondierenden elektronischen Schalters, von der Betriebsspannung trennen und einen Anschlusspunkt des Kondensators mit dem Bezugspotential verbinden. Die Auswerte- und Steuereinheit kann an einem gemeinsamen Anschlusspunkt des Kondensators und der korrespondierenden Detektionsspule das Messsignal zur Auswertung abgreifen.

Unter der Auswerte- und Steuereinheit kann vorliegend eine elektrische Schaltung oder ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur berührungslosen Erfassung von Drehwinkeln möglich.

Besonders vorteilhaft ist, dass die mindestens eine Messschaltung einen Kondensator umfassen kann, welcher elektrisch parallel zur auszuwertenden Detektionsspule geschaltet werden und während eines Messvorgangs eine durch die Induktivität der Detektionsspule gespeicherte Energie aufnehmen kann. Die magnetische Energie der Induktivität der Detektionsspule kann vorzugsweise mittels eines gerichteten Stromimpulses über eine Diode zum Kondensator übertragen werden, welcher die übertragene Energie als elektrische Energie speichern kann. Während eines Auswertevorgangs kann der Kondensator die gespeicherte elektrische Energie als Messsignal an die Auswerte- und Steuereinheit ausgeben. Vorzugsweise ist das Messsignal ein Spannungssignal oder ein Stromsignal.

In weiterer vorteilhafter Ausgestaltung der erfindungsgemäßen Sensoranordnung kann die Auswerte- und Steuereinheit einen Mikrocontroller mit einem A/D-Wandler aufweisen, welcher das Messsignal auswerten kann.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt eine schematische Draufsicht auf ein Ausführungsbeispiel einer erfindungsgemäßen Sensoranordnung zur berührungslosen Erfassung von Drehwinkeln.

Fig. 2 zeigt ein schematisches Schaltbild eines Ausführungsbeispiels einer Messschaltung für die erfindungsgemäße Sensoranordnung aus Fig. 1.

Ausführungsformen der Erfindung

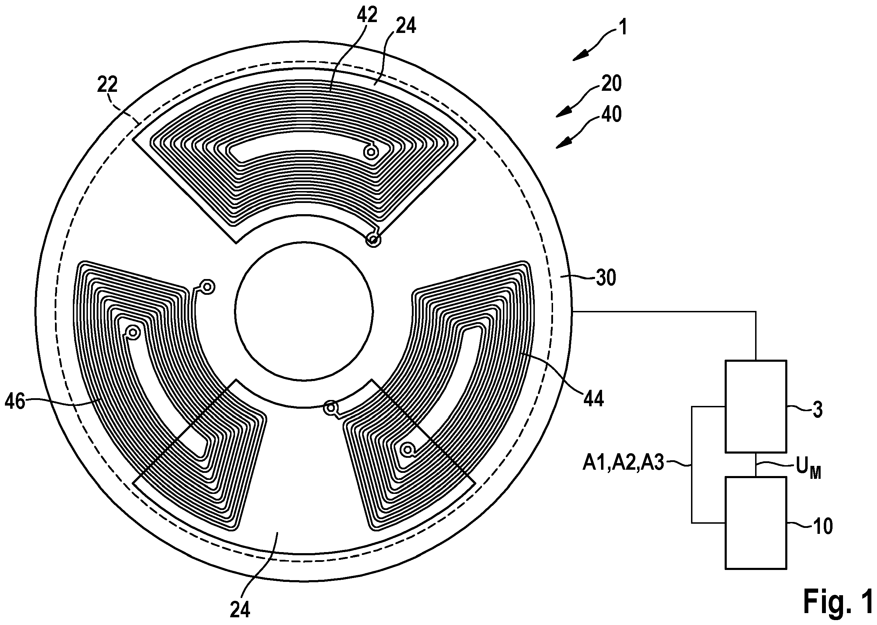

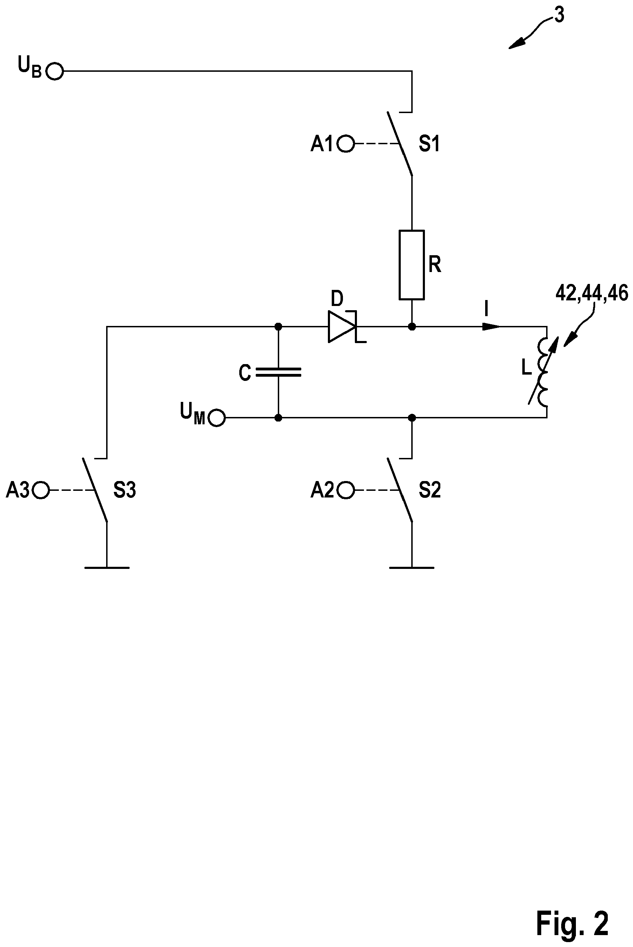

Wie aus Fig. 1 und 2 ersichtlich ist, umfasst das dargestellte Ausführungsbeispiel einer erfindungsgemäßen Sensoranordnung 1 zur berührungslosen Erfassung von Drehwinkeln an einem rotierenden Bauteil ein mit dem rotierenden Bauteil gekoppeltes Target 20, welches einen ringscheibenförmigen Grundkörper 22 mit mindestens einer Metallfläche 24 aufweist, und eine Spulenanordnung 40 mit mindestens einer flächige Detektionsspule 42, 44, 46, welche auf einer runden Leiterplatte 30 angeordnet ist. Selbstverständlich muss die Leiterplatte 30 nicht rund sein, die Leiterplatte 30 kann auch eine andere geeignete Form aufweisen. Das Target 20 erzeugt in Verbindung mit der Spulenanordnung 40 mindestens eine Information zur Ermittlung des aktuellen Drehwinkels des rotierenden Bauteils. Hierbei wandelt mindestens eine Messschaltung 3 die Induktivität L einer korrespondierenden flächigen Detektionsspule 42, 44, 46, welche sich in Abhängigkeit vom Überdeckungsgrad mit der mindestens einen Metallfläche 24 des rotierenden Targets 20 durch Wirbelstromeffekte ändert, in ein Messsignal $U_M$, welches eine Auswerte- und Steuereinheit 10 messtechnisch erfasst und zur Berechnung des Drehwinkels auswertet.

Im dargestellten Ausführungsbeispiel umfasst die Spulenanordnung 40 drei flächige Detektionsspulen 42, 44, 46, welche gleichmäßig verteilt am Umfang eines Kreises angeordnet sind, und das rotierende Targets 20 umfasst zwei Metallflächen 24, welche durch Wirbelstromeffekte die Induktivitäten L der flächigen Detektionsspulen 42, 44, 46 in Abhängigkeit vom Überdeckungsgrad beeinflussen. Hierbei erzeugt eine Messschaltung 3 ein Messsignal $U_M$, welches die Induktivitätsänderung der jeweiligen Detektionsspule 42, 44, 46 repräsentiert. Im dargestellten Ausführungsbeispiel umfasst die Sensoranordnung 1 drei Messschaltungen 3, welche jeweils einer der Detektionsspulen 42, 44, 46 zugeordnet sind.

Wie aus Fig. 1 weiter ersichtlich ist, ist die Spulenanordnung 40 im dargestellten Ausführungsbeispiel auf einer runden Leiterplatte 30 angeordnet und mit der Auswerte- und Steuereinheit 10 elektrisch verbunden. Der in den Zeichnungen transparent dargestellte ringscheibenförmige Grundkörper 22 des Targets 20 ist mit einem vorgegebenen gleichbleibenden axialen Abstand über bzw. unter der Leiterplatte 30 angeordnet. Die Überdeckung der Detektionsspulen 42, 44, 46 Spulen mit den leitfähigen Metallflächen 24 führt während einer Erregungsphase der Detektionsspule 42, 44, 46 mit einem Wechselstrom zur Erzeugung einer Induktionsspannung, welche durch das Metall kurzgeschlossen wird. Der Strom erzeugt ein Magnetfeld, welcher seiner Ursache entgegen wirkt. Letztendlich erscheint dadurch die Induktivität L der Detektionsspule 42, 44, 46 kleiner. Die Messung der Induktivität L erlaubt die Bestimmung des Überdeckungsgrads und somit der Bestimmung des Drehwinkels. Bei den dargestellten Ausführungsbeispielen kann das nicht näher dargestellte rotierende Bauteil eine Welle sein, welche mit einem ausreichenden seitlichen Spiel durch die kreisförmige Öffnung in der Leiterplatte 30 geführt ist und drehfest mit dem Grundkörper 22 des Targets 20 verbunden ist.

Wie aus Fig. 2 weiter ersichtlich ist, umfasst die mindestens eine Messschaltung 3 einen Kondensator C, welcher elektrisch parallel zur auszuwertenden Detektionsspule 42, 44, 46 geschaltet ist und während eines Messvorgangs eine durch die Induktivität L der Detektionsspule 42, 44, 46 gespeicherte Energie aufnimmt. Die magnetische Energie der Induktivität L der Detektionsspule 42, 44, 46 ist im dargestellten Ausführungsbeispiel mittels eines gerichteten Stromimpulses über eine Diode D zum Kondensator C übertragbar, welcher die übertragene Energie als elektrische Energie speichert. Während eines Auswertevorgangs gibt der Kondensator C die gespeicherte elektrische Energie als Messsignal $U_M$ an die Auswerte- und Steuereinheit 10 aus. Zudem weist die mindestens eine Messschaltung 3 mehrere elektronische Schalter S1, S2, S3 auf, welche die Auswerte- und Steuereinheit 10 über korrespondierende Ansteuersignale A1, A2, A2 schaltet. Die elektronischen Schalter S1, S2, S3 sind im dargestellten Ausführungsbeispiel als Transistoren, vorzugsweise als Feldeffekttransistoren ausgeführt.

Wie aus Fig. 2 weiter ersichtlich ist, sind die Detektionsspulen 42, 44, 46 jeweils über einen ersten elektronischen Schalter S1, welcher von der Auswerte- und Steuereinheit 10 über ein erstes Ansteuersignal A1 schaltbar ist, mit einer Betriebsspannung $U_B$ und über einen zweiten elektronischen Schalter S2, welcher von der Auswerte- und Steuereinheit 10 über ein zweites Ansteuersignal A2 schaltbar ist, mit einem Bezugspotential, hier Masse verbindbar. Während der Erregungsphase verbindet die Auswerte- und Steuereinheit 10 die auszuwertende Detektionsspule 42, 44, 46 durch Schalten des ersten elektronischen Schalters S1 mit der Betriebsspannung $U_B$ und durch Schalten des zweiten elektronischen Schalters S2 mit dem Bezugspotential. Zu Beginn des Messvorgangs trennt die Auswerte- und Steuereinheit 10 die auszuwertende Detektionsspule 42, 44, 46 durch Umschalten des zweiten Schalters S2 von dem Bezugspotential. Nach dem Umschaltvorgang des zweiten Schalters S2 wird die Energie der korrespondierenden Detektionsspule 42, 44, 46 durch die Diode D zum Kondensator C übertragen. Die Spannung $U_M$ am Kondensator C kann ungefähr mit den Gleichungen (1) und (2) berechnet werden.

$$\frac{C}{2}U^2 = \frac{L}{2}I^2 \qquad\qquad (1)$$

$$U = I\sqrt{\frac{L}{C}} \qquad\qquad (2)$$

Zu Beginn des Auswertevorgangs trennt die Auswerte- und Steuereinheit 10 die mindestens eine Detektionsspule 42, 44, 46 von der Betriebsspannung $U_B$ durch Umschalten des ersten Schalters S1, der zweite Schalter S2 ist bereits geöffnet. Durch das Schalten eines dritten Schalters S3 verbindet die Auswerte- und Steuereinheit 10 einen Anschlusspunkt des Kondensators C mit dem Bezugspotential. Dadurch kann die Auswerte- und Steuereinheit 10 das Messsignal $U_M$ an einem gemeinsamen Anschlusspunkt des Kondensators C und der korrespondierenden Detektionsspule 42, 44, 46 abgreifen. Das Messsignal $U_M$ kann somit als analoges Spannungssignal am Verbindungspunkt zwischen der Detektionsspule 42, 44, 46 und dem Kondensator C gegen das Bezugspotenzial gemessen werden. Zur Auswertung des Messsignals $U_M$ weist die Auswerte- und Steuereinheit 10 einen Mikrocontroller mit einem A/D-Wandler auf, welcher das analoge Messsignal $U_M$ in ein digitales Signal umwandelt.

Der Vorteil des beschriebenen Messprinzips besteht darin, dass durch die Verwendung von günstigen Standardbauteilen, wie beispielsweise Transistoren S1, S2, S3, Diode D und Kondensator C mittels eines Mikrocontrollers, der einen A/D-Wandler aufweist, bereits eine Messung der Induktion L durchgeführt werden kann und somit jederzeit leicht in Konzepte integrierbar ist, welche für andere Funktionen bereits einen Mikrocontroller enthalten. Aufgrund der geringen Bauteilezahl ist eine spezielle ASIC Entwicklung möglich jedoch nicht erforderlich. Der Einsatz des Messprinzips ist somit äußerst flexibel.

Bei einer Änderung der Induktivität L von beispielsweise 1,25 $\mu$H zu 1,0 $\mu$H über einem Drehwinkel von 70° und einem Speicherkondensator C mit 100 pF würde ein Strom I von 56 mA in der korrespondierenden Detektionsspule 42, 44, 46 zu einer Spannung $U_M$ am Kondensator C von ca. 4,38 V bzw. 5,0 V führen (-60% Wandlungseffizienz). Die Begrenzung des Stroms I kann durch einen Vorwiderstand R erfolgen, welcher beispielsweise einen Wert von ca. 50 $\Omega$ aufweist. Der Umladevorgang dauert ca. 1 us. Die Messzeit ist somit potenziell sehr kurz. Um einen Winkel von 0,1° aufzulösen gilt es Spannungsunterschiede von ca. 1 mV zu detektieren. Wird der Messbereich des A/D-Wandlers nicht auf den erforderlichen Bereich von ungefähr 4,0 bis 5,0 V begrenzt, kann eine Auflösung von 13 Bit verwendet werden.

Das Messen von Gleichspannungen an Kondensatoren ist in vorteilhafter Weise vergleichsweise rauscharm möglich. Die Reduzierung der Rauschamplitude auf unter 1 mV ist möglich. Das Messsignal ist jedoch direkt von der Kapazität des Kondensator C abhängig, welche einem Temperaturgang (<30 ppm/K) unterliegt. Die Alterung und die Spannungsabhängigkeit der Kapazität des Kondensators C kann durch Verwendung von NP0-Dielektrika weitgehend minimiert werden. Während der Messung liegt die Diode D, welcher vorzugsweise als Schottky-Diode ausgeführt ist, parallel zum Kondensator C. Der korrespondierende Leckstrom der Diode D ist stark von der Temperatur abhängig, und kann beispielsweise $10^{-4}$ $\mu$A bei -25°C und 100 $\mu$A bei 125°C betragen. Im Fall einer Messspannung von 5V entspricht dies einem Entladewiderstand von minimal 50 k$\Omega$. Die Zeitkonstante des korrespondierenden RC-Glieds beträgt somit minimal 5 $\mu$s. Der A/D-Wandler weist vorzugsweise eine Samplingrate von >200 kS auf. Durch Aufnahme von zwei oder mehr Samples kann der exponentielle Spannungsabfall bestimmt und die ursprüngliche Messspannung extrapoliert werden. Über den bekannten Zusammenhang des Diodenleckstroms und der Temperatur kann zudem die Temperatur bestimmt werden. Diese Information kann in vorteilhafter Weise für weitergehende Temperaturkorrekturen verwendet werden.

Die Übertragung der magnetischen Energie der korrespondierenden Detektionsspule 42, 44, 46 in elektrische Energie des Kondensators C erfolgt durch einen gerichteten Stromimpuls, wobei die Diode D einen Rückfluss verhindert. EMV-Störungen entstehen durch Wechselsignale. Diese könnten durch die Diode D gleichgerichtet werden. Eventuell ist es möglich einen Bypass für Wechselfelder zu realisieren, ohne die Diodenwirkung aufzuheben. Das System ist prinzipiell in der Lage Störungen zu erkennen. Da die Messung der Kondensatorspannung bei deaktivierter Spulenerregung erfolgt, kann die Spannung des induzierten Störsignals in vorteilhafter Weise vom Messsignal $U_M$ unterschieden werden.

**Patentansprüche**

1. Sensoranordnung zur berührungslosen Erfassung von Drehwinkeln an einem rotierenden Bauteil, wobei das rotierende Bauteil mit einem scheibenförmigen Target (20) gekoppelt ist, welches mindestens eine Metallfläche (24) aufweist und in Verbindung mit einer Spulenanordnung (40), welche mindestens eine flächige Detektionsspule (42, 44, 46) aufweist, mindestens eine Information zur Ermittlung des aktuellen Drehwinkels des rotierenden Bauteils erzeugt, wobei die Sensoranordnung die Spulenanordnung (40) und mindestens eine Messschaltung (3) umfasst, wobei die mindestens eine Messschaltung (3) die Induktivität (L) einer korrespondierenden flächigen Detektionsspule (42, 44, 46), welche sich in Abhängigkeit vom Überdeckungsgrad mit der mindestens einen Metallfläche (24) des rotierenden Targets (20) durch Wirbelstromeffekte ändert, in ein Messsignal ($U_M$) wandelt, welches eine Auswerte- und Steuereinheit (10) messtechnisch erfasst und zur Berechnung des Drehwinkels auswertet, **dadurch gekennzeichnet, dass** die mindestens eine Messschaltung (3) mehrere elektronische Schalter (S1, S2, S3) aufweist, welche die Auswerte- und Steuereinheit (10) über korrespondierende Ansteuersignale (A1, A2, A2) schaltet, wobei die Auswerte- und Steuereinheit (10) während einer Erregungsphase einen ersten Schalter (S1) über ein erstes Ansteuersignal (A1), und einen zweiten Schalter (S2) über ein zweites Ansteuersignal (A2) schaltet, wobei der erste Schalter (S1) die auszuwertende Detektionsspule (42, 44, 46) mit einer Betriebsspannung ($U_B$) verbindet und der zweite Schalter (S2) die auszuwertende Detektionsspule (42, 44, 46) mit einem Bezugspotential verbindet, wobei die Auswerte- und Steuereinheit (10) zu Beginn des Messvorgangs den zweiten Schalter (S2) umschaltet, welcher die auszuwertende Detektionsspule (42, 44, 46) vom Bezugspotential trennt.

2. Sensoranordnung nach Anspruch 1, **dadurch gekennzeichnet, dass** die mindestens eine Messschaltung (3) einen Kondensator (C) umfasst, welcher elektrisch parallel zur auszuwertenden Detektionsspule (42, 44, 46) geschaltet ist und während eines Messvorgangs eine durch die Induktivität (L) der Detektionsspule (42, 44, 46) gespeicherte Energie aufnimmt.

**3.** Sensoranordnung nach Anspruch 2, **dadurch gekennzeichnet, dass** die magnetische Energie der Induktivität (L) der Detektionsspule (42, 44, 46) mittels eines gerichteten Stromimpulses über eine Diode (D) zum Kondensator (C) übertragbar ist, welcher die übertragene Energie als elektrische Energie speichert.

**4.** Sensoranordnung nach Anspruch 3, **dadurch gekennzeichnet, dass** der Kondensator (C) die gespeicherte elektrische Energie während eines Auswertevorgangs als Messsignal ($U_M$) an die Auswerte- und Steuereinheit (10) ausgibt.

**5.** Sensoranordnung nach einem der Ansprüche 1 bis 4, **dadurch gekennzeichnet, dass** das Messsignal ($U_M$) ein Spannungssignal oder ein Stromsignal ist.

**6.** Sensoranordnung nach einem der Ansprüche 1 bis 5, **dadurch gekennzeichnet, dass** die Auswerte- und Steuereinheit (10) zu Beginn des Auswertevorgangs den ersten Schalter (S1) umschaltet, welcher die mindestens eine Detektionsspule (42, 44, 46) von der Betriebsspannung ($U_B$) trennt, und einen dritten Schalter (S2) über ein drittes Ansteuersignal (A3) schaltet, welcher einen Anschlusspunkt des Kondensators (C) mit dem Bezugspotential verbindet, wobei die Auswerte- und Steuereinheit (10) an einem gemeinsamen Anschlusspunkt des Kondensators und der korrespondierenden Detektionsspule (42, 44, 46) das Messsignal ($U_M$) abgreift.

**7.** Sensoranordnung nach Anspruch 6, **dadurch gekennzeichnet, dass** die Auswerte- und Steuereinheit (10) einen Mikrocontroller mit einem A/D-Wandler aufweist, welcher das Messsignal ($U_M$) auswertet.

## Claims

**1.** Sensor arrangement for the contactless sensing of angles of rotation on a rotating part, wherein the rotating part is coupled with a disk-shaped target (20) which has at least one metal surface (24), and generates at least one piece of information for ascertaining the instantaneous angle of rotation of the rotating part in connection with a coil arrangement (40) which has at least one flat detection coil (42, 44, 46), wherein the sensor arrangement comprises the coil arrangement (40) and at least one measuring circuit (3), wherein the at least one measuring circuit (3) converts the inductance (L) of a corresponding flat detection coil (42, 44, 46), which changes due to eddy-current effects, as a function of the degree of overlap with the at least one metal surface (24) of the rotating target (20), into a measuring signal ($U_M$), which an evaluation and control unit (10) detects using measurement techniques and evaluates for calculating the angle of rotation, **characterized in that** the at least one measuring circuit (3) has multiple electronic switches (S1, S2, S3), which the evaluation and control unit (10) switches via corresponding control signals (A1, A2, A2), wherein the evaluation and control unit (10), during an excitation phase, switches a first switch (S1) via a first control signal (A1) and switches a second switch (S2) via a second control signal (A2), wherein the first switch (S1) connects the detection coil (42, 44, 46) to be evaluated to an operating voltage ($U_B$) and the second switch (S2) connects the detection coil (42, 44, 46)to be evaluated to a reference potential, wherein the evaluation and control unit (10), at the start of the measuring process, changes over the second switch (S2) which disconnects the detection coil (42, 44, 46) to be evaluated from the reference potential.

**2.** Sensor arrangement according to Claim 1, **characterized in that** the at least one measuring circuit (3) includes a capacitor (C) which is electrically connected in parallel with the detection coil (42, 44, 46) to be evaluated, and which absorbs energy stored via the inductance (L) of the detection coil (42, 44, 46) during a measuring process.

**3.** Sensor arrangement according to Claim 2, **characterized in that** the magnetic energy of the inductance (L) of the detection coil (42, 44, 46) is transmittable by means of a directed current pulse via a diode (D) to the capacitor (C), which stores the transmitted energy as electrical energy.

**4.** Sensor arrangement according to Claim 3, **characterized in that** the capacitor (C) outputs the stored electrical energy during an evaluation process as a measuring signal ($U_M$) to the evaluation and control unit (10).

**5.** Sensor arrangement according to one of Claims 1 to 4, **characterized in that** the measuring signal ($U_M$) is a voltage signal or a current signal.

**6.** Sensor arrangement according to one of Claims 1 to 5, **characterized in that** at the start of the evaluation process, the evaluation and control unit (10) changes over the first switch (S1), which disconnects the at least one detection coil (42, 44, 46) from the operating voltage ($U_B$), and switches a third switch (S2) via a third control signal (A3), which connects a connecting point of the capacitor (C) to the reference potential, wherein the evaluation and control unit (10) taps the measuring signal ($U_M$) at a shared connecting point of the capacitor and the corresponding detection coil (42, 44, 46) .

**7.** Sensor arrangement according to Claim 6, **characterized in that** the evaluation and control unit (10) includes a microcontroller with an A/D converter, which evaluates the measuring signal ($U_M$).

## Revendications

**1.** Agencement de capteur pour la détection sans contact d'angles de rotation sur un composant rotatif, le composant rotatif étant accouplé à une cible (20) en forme de disque qui présente au moins une surface métallique (24) et qui produit, en association avec un agencement de bobine (40) qui présente au moins une bobine de détection plate (42, 44, 46), au moins une information pour déterminer l'angle de rotation actuel du composant rotatif, l'agencement de capteur comprenant l'agencement de bobine (40) et au moins un circuit de mesure (3), l'au moins un circuit de mesure (3) convertissant l'inductance (L) d'une bobine de détection plate correspondante (42, 44, 46) qui varie par des effets de courants de Foucault, en fonction du degré de recouvrement par l'au moins une surface métallique (24) de la cible rotative (20), en un signal de mesure ($U_M$) qui est détecté par une mesure de technique et qui est analysé pour le calcul de l'angle de rotation par une unité de commande et d'analyse (10),
**caractérisé en ce que** l'au moins un circuit de mesure (3) présente plusieurs commutateurs électroniques (S1, S2, S3) qui sont commutés par l'unité de commande et d'analyse (10) par le biais de signaux de commande correspondants (A1, A2, A2), l'unité de commande et d'analyse (10), pendant une phase d'excitation, commutant un premier commutateur (S1) par le biais d'un premier signal de commande (A1), et commutant un deuxième commutateur (S2) par le biais d'un deuxième signal de commande (A2), le premier commutateur (S1) reliant la bobine de détection (42, 44, 46) à analyser à une tension de service ($U_B$) et le deuxième commutateur (S2) reliant la bobine de détection à analyser (42, 44, 46) à un potentiel de référence, l'unité de commande et d'analyse (10), au début de l'opération de mesure, commutant le deuxième commutateur (S2) qui sépare la bobine de détection à analyser (42, 44, 46) du potentiel de référence.

**2.** Agencement de capteur selon la revendication 1, **caractérisé en ce que** l'au moins un circuit de mesure (3) comprend un condensateur (C) qui est connecté électriquement en parallèle avec la bobine de détection à analyser (42, 44, 46) et pendant une opération de mesure, reçoit une énergie stockée par l'inductance (L) de la bobine de détection (42, 44, 46).

**3.** Agencement de capteur selon la revendication 2, **caractérisé en ce que** l'énergie magnétique de l'inductance (L) de la bobine de détection (42, 44, 46) peut être transmise par le biais d'une diode (D) au moyen d'une impulsion électrique orientée au condensateur (C) qui stocke l'énergie transmise sous forme d'énergie électrique.

**4.** Agencement de capteur selon la revendication 3, **caractérisé en ce que** le condensateur (C) fournit l'énergie électrique stockée pendant une opération d'analyse sous forme de signal de mesure ($U_M$) à l'unité de commande et d'analyse (10).

**5.** Agencement de capteur selon l'une quelconque des revendications 1 à 4, **caractérisé en ce que** le signal de mesure ($U_M$) est un signal de tension ou un signal de courant.

**6.** Agencement de capteur selon l'une quelconque des revendications 1 à 5, **caractérisé en ce que** l'unité de commande et d'analyse (10), au début de l'opération d'analyse, commute le premier commutateur (S1) qui sépare l'au moins une bobine de détection (42, 44, 46) de la tension de service ($U_B$), et commute, par le biais d'un troisième signal de commande (A3), un troisième commutateur (S2) qui relie un point de raccordement du condensateur (C) au potentiel de référence, l'unité de commande et d'analyse (10), au niveau d'un point de raccordement commun du condensateur et de la bobine de détection correspondante (42, 44, 46), prélevant le signal de mesure ($U_M$).

**7.** Agencement de capteur selon la revendication 6, **caractérisé en ce que** l'unité de commande et d'analyse (10) présente un microcontrôleur avec un convertisseur A/N qui analyse le signal de mesure ($U_M$) .

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19738836 A1
- DE 10352351 A1
- EP 1122520 A1
- FR 2882818
- US 2005025576 A
- DE 102007037217 A1